(19) Europäisches Patentamt
European Patent Office
Office européen des brevets

(11) EP 1 819 541 B1

(12) **EUROPÄISCHE PATENTSCHRIFT**

(45) Veröffentlichungstag und Bekanntmachung des Hinweises auf die Patenterteilung:
**13.11.2013   Patentblatt 2013/46**

(21) Anmeldenummer: 05792597.6

(22) Anmeldetag: **29.09.2005**

(51) Int Cl.:
***B60H 1/32*** *(2006.01)*

(86) Internationale Anmeldenummer:
**PCT/EP2005/010530**

(87) Internationale Veröffentlichungsnummer:
**WO 2006/056260 (01.06.2006 Gazette 2006/22)**

(54) **KLIMAANLAGE FÜR EIN KRAFTFAHRZEUG**

AIR CONDITIONING SYSTEM FOR A MOTOR VEHICLE

INSTALLATION DE CLIMATISATION POUR UN VEHICULE A MOTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.11.2004   DE 102004057159**

(43) Veröffentlichungstag der Anmeldung:
**22.08.2007   Patentblatt 2007/34**

(73) Patentinhaber: **Volkswagen Aktiengesellschaft 38440 Wolfsburg (DE)**

(72) Erfinder:
• **HELMS, Karsten 38553 Wasbüttel (DE)**
• **HELLMANN, Peter 38162 Cremlingen (DE)**

(74) Vertreter: **Pohlmann, Bernd Michael et al Reinhardt & Pohlmann Patentanwälte Rossmarkt 12 60311 Frankfurt am Main (DE)**

(56) Entgegenhaltungen:
**EP-A- 1 304 479     DE-A1- 10 106 243
US-A- 5 924 296     US-A1- 2002 069 656**

**Beschreibung**

Die Erfindung betrifft eine Klimaanlage für ein Kraftfahrzeug mit einem Kühlmittelkreislauf, durch den Kühlmittel mittels eines Kompressors pumpbar ist.

Eine derartige Klimaanlage ist z.B. aus dem Buch Bosch, Kraftfahrtechnisches Taschenbuch, 23. Auflage, Vieweg, 1999, ISBN 3-528-03876-4, Seiten 778 und 779 bekannt. Bei derartigen Klimaanlagen ist es danach bekannt, automatische Regelungen mit Programmwahl zur selbsttätigen Einstellung einer gewünschten Innentemperatur, Luftmenge und Luftverteilung einzusetzen. Diese Größen seien stets miteinander verknüpft und nicht frei veränderbar. Ein vorgesehenes elektronisches Steuergerät erfasse sowohl alle wichtigen Einfluss und Störgrößen als auch die von den Insassen gewählte Temperatur und bilde daraus laufend einen Temperatur-Sollwert. Der Temperatur-Sollwert werde mit der Ist-Temperatur verglichen und die festgestellte Differenz erzeuge im Steuergerät Führungsgrößen für die Heizungs-, Kühlungs- und Luftmengenregelung. Eine weitere Funktion aktiviere die Klappensteuerung für die Luftverteilung - abhängig vom Programm, das Insassen eingestellt haben. Alle Regelkreise ließen sich über Handeingabe beeinflussen. Der von der Regelung ermittelte Sollwert der Temperatur werde durch wasser- oder luftseitige Regelung erreicht. Die Luftmenge könne durch Einstellung verschiedener Gebläsestufen oder stufenlos auf den Sollwert gebracht werden. Im allgemeinen handele es sich um eine Steuerung ohne Istwert-Verarbeitung. Bei hohen Geschwindigkeiten reiche diese Einrichtung nicht aus, weil der dabei auftretende Staudruck die Fördermenge erhöhe. Eine spezielle Steuerung könne mit zunehmender Fahrgeschwindigkeit zunächst die Gebläsedrehzahl bis zum Stillstand verringern und bei noch weiter steigendem Staudruck den eintretenden Luftstrom über eine Drosselklappe begrenzen.

Aus der DE 101 06 243 A1 ist bekannt, ein momentanes Lastdrehmoment zu berechnen, mit einem maximalen von der Motorsteuerung vorgegebenen Grenzdrehmoment zu vergleichen und bei gegebenen Grenzdrehmoment für den Kältemittelsaugdruck vor Kompressor eine Sollwertvorgabe in Abhängigkeit von dem Grenzdrehmoment, Luftmassenstrom, Lufteintrittstemperatur, Temperatur nach dem Verdampfer, Feuchte, der Kompressordrehzahl und des Kältemittelhochdrucks nach Kompressor zu bestimmen.

Ferner ist es aus den nachveröffentlichten Dokumenten WO 2005/123428 A1 und EP 1 647 711 A2 bekannt, in Abhängigkeit von einem saugseitig in dem Kühlmittelkreislauf in Bezug auf einen vor dem Kompressor herrschenden Drucks des Kühlmittels ein momentanes Drehmoment zu bestimmen.

Es ist Aufgabe der Erfindung, den Betrieb eines Kraftfahrzeuges mit einer Klimaanlage zu verbessern.

Vorgenannte Aufgabe wird durch die Merkmale der unabhängigen Ansprüche gelöst.

Bei der erfindungsgemäßen Klimaanlage für ein Kraftfahrzeug mit einem Kühlmittelkreislauf, durch den Kühlmittel mittels eines Kompressors pumpbar ist, ist vorgesehen, dass die Klimaanlage eine Momentenbestimmung zur Bestimmung eines zum Betrieb des Kompressors notwendigen Antriebsdrehmomentes in Abhängigkeit einer Temperatur von Luft, die an einem in den Kühlmittelkreislauf integrierten Verdampfer zum Verdampfen von Kühlmittel vorbeigeströmt ist, eines in dem Kühlmittelkreislauf in Bezug auf eine Fließrichtung des Kühlmittels, z.B. unmittelbar, vor dem Kompressor herrschenden Drucks des Kühlmittels und/oder einem Stellsignal zur Einstellung eines einstellbaren Kompressorhubes des Kompressors aufweist.

Ein in dem Kühlmittelkreislauf in Bezug auf eine Fließrichtung des Kühlmittels vor dem Kompressor herrschender Druck im Sinne der Erfindung ist insbesondere ein in dem Kühlmittelkreislauf zwischen einem Verdampfer und dem Kompressor herrschender Druck. Eine Temperatur von Luft, die an einem in den Kühlmittelkreislauf integrierten Verdampfer zum Verdampfen von Kühlmittel vorbeigeströmt ist, ist im Sinne der Erfindung insbesondere Luft die durch ein System von Kühlrippen des Verdampfer hindurch geströmt ist. Ein zum Betrieb eines Kompressors notwendiges Antriebsdrehmoment im Sinne der Erfindung ist insbesondere das Drehmoment, das aufgebracht werden muss, um den Kompressor mit einer gewünschten Drehzahl oder einer Ist-Drehzahl zu betreiben.

Gemäß der Erfindung ist mittels der Momentenbestimmung das zum Betrieb des Kompressors notwendige Antriebsdrehmoment in Abhängigkeit eines in dem Kühlmittelkreislauf in Bezug auf die Fließrichtung des Kühlmittels hinter dem Kompressor herrschenden Drucks des Kühlmittels bestimmbar.

Ein in dem Kühlmittelkreislauf in Bezug auf eine Fließrichtung des Kühlmittels hinter dem Kompressor herrschender Druck im Sinne der Erfindung ist insbesondere ein in dem Kühlmittelkreislauf zwischen dem Kompressor und dem Verdampfer, insbesondere zwischen dem Kompressor und einem vor dem Verdampfer angeordneten Ventil, herrschender Druck.

Ferner ist mittels der Momentenbestimmung das zum Betrieb des Kompressors notwendige Antriebsdrehmoment in Abhängigkeit einer Antriebsdrehzahl des Kompressors bestimmbar. In weiterhin vorteilhafter Ausgestaltung der Erfindung ist das Kühlmittel R134a, R152a oder Kohlendioxid.

Vorgenannte Aufgabe wird in Verbindung mit vorgenannten Merkmalen zudem durch ein Kraftfahrzeug mit einer Klimaanlage gelöst, die einen Kühlmittelkreislauf, durch den Kühlmittel mittels eines Kompressors pumpbar ist, und eine Momentenbestimmung zur Bestimmung eines zum Betrieb des Kompressors notwendigen Antriebsdrehmomentes in Abhängigkeit einer Temperatur von Luft, die an einem in den Kühlmittelkreislauf integrierten Verdampfer zum Verdampfen von Kühlmittel vorbeigeströmt ist, eines in dem Kühlmittelkreislauf in Bezug auf eine Fließrichtung des Kühlmittels, z.B. unmittelbar, vor dem Kompressor herrschenden Drucks des Kühlmittels und/oder einem Stellsignal zur Einstellung eines einstellbaren Kompressorhubes des Kompressors aufweist.

Vorteilhaft weist das Kraftfahrzeug ein Antriebsaggregat zum Antrieb des Kraftfahrzeuges und zum Antrieb des Kompressors sowie eine Antriebssteuerung zur Steuerung des Antriebsaggregates in Abhängigkeit des mittels der Momentenbestimmung bestimmbaren zum Betrieb des Kompressors notwendigen Antriebsdrehmomentes auf. Das Antriebsaggregat kann z.B. ein Verbrennungsmotor, ein Elektromotor oder ein Hybridmotor sein. Die Antriebssteuerung kann z.B. eine Motorsteuerung sein.

Vorgenannte Aufgabe wird zudem durch ein Verfahren zum Betrieb einer vorgenannte Merkmale aufweisenden, Klimaanlage für ein Kraftfahrzeug mit einem Kühlmittelkreislauf, durch den Kühlmittel, insbesondere R134a, R152a oder Kohlendioxid, mittels eines Kompressors pumpbar ist, gelöst, wobei ein zum Betrieb des Kompressors notwendiges Antriebsdrehmoment in Abhängigkeit einer Temperatur von Luft, die an einem in den Kühlmittelkreislauf integrierten Verdampfer zum Verdampfen von Kühlmittel vorbeigeströmt ist, eines in dem Kühlmittelkreislauf in Bezug auf eine Fließrichtung des Kühlmittels, z.B. unmittelbar, vor dem Kompressor herrschenden Drucks des Kühlmittels und/oder einem Stellsignal zur Einstellung eines einstellbaren Kompressorhubes des Kompressors bestimmt wird.

In vorteilhafter Ausgestaltung der Erfindung wird das zum Betrieb des Kompressors notwendige Antriebsdrehmoment in Abhängigkeit eines in dem Kühlmittelkreislauf in Bezug auf die Fließrichtung des Kühlmittels hinter dem Kompressor herrschenden Drucks des Kühlmittels bestimmt.

In weiterhin vorteilhafter Ausgestaltung der Erfindung wird das zum Betrieb des Kompressors notwendige Antriebsdrehmoment in Abhängigkeit einer Antriebsdrehzahl des Kompressors bestimmt.

Weitere Vorteile und Einzelheiten ergeben sich aus der nachfolgenden Beschreibung von Ausführungsbeispielen. Dabei zeigen:

Fig. 1    eine schematische Darstellung eines Kraftfahrzeuges mit einem Verbrennungsmotor und einer Klimaanlage,

Fig. 2    eine Momentenbestimmung zur Bestimmung eines zum Betrieb eines Kompressors notwendigen Antriebsdrehmomentes und

Fig. 3    ein Verfahren zum Betrieb einer, insbesondere vorgenannte Merkmale aufweisenden, Klimaanlage für ein Kraftfahrzeug,

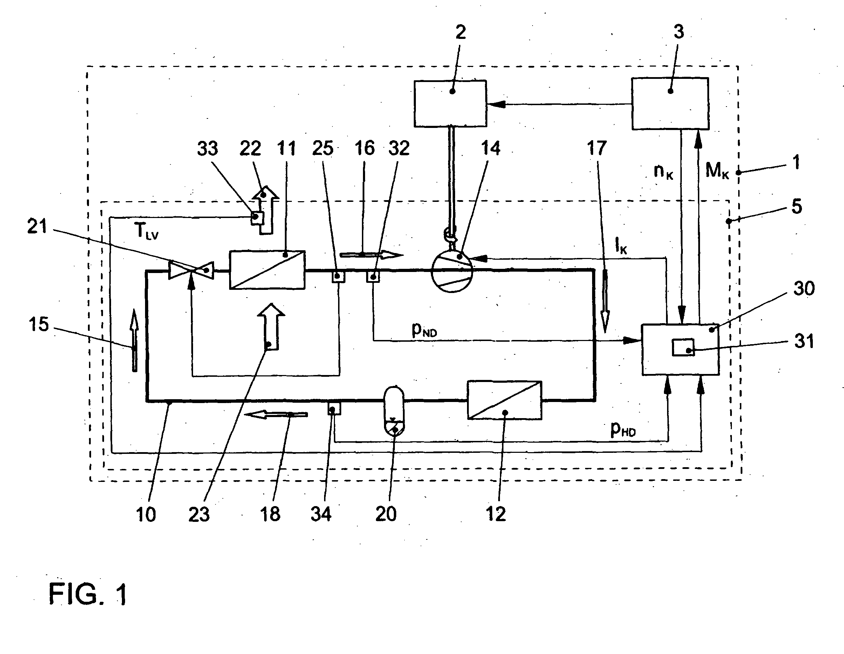

Fig. 1 zeigt eine schematische Darstellung eines Kraftfahrzeuges 1. Das Kraftfahrzeug 1 weist einen Verbrennungsmotor 2 und eine Motorsteuerung 3 zur Steuerung des Verbrennungsmotors 2 auf. Das Kraftfahrzeug 1 weist zudem eine Klimaanlage 5 auf.

Die Klimaanlage 5 umfasst einem Kühlmittelkreislauf 10, durch den Kühlmittel, insbesondere R134a, R152a oder Kohlendioxid, mittels eines Kompressors 14 in einer durch Pfeile 15, 16, 17, 18 angedeuteten Fließrichtung gepumpt wird bzw. pumpbar ist. Der Kompressor 14 wird durch den Verbrennungsmotor 2 angetrieben. Dabei ist insbesondere vorgesehen, dass eine Drehzahl $n_K$ des Kompressors 14 proportional einer Drehzahl des Verbrennungsmotors 2 ist. Der Volumenstrom des durch den Kühlmittelkreislauf 10 strömenden Kühlmittels ist durch Einstellung eines einstellbaren Kompressorhubes des Kompressors 14 einstellbar. Der Kompressorhub ist mittels eines Kompressorstromes $I_K$ als Stellsignal einstellbar.

In den Kühlmittelkreislauf 10 ist ein Verdampfer 11 zum Verdampfen von Kühlmittel integriert. Der Verdampfer 11 weist nicht dargestellte Kühlrippen auf, an denen Luft 23 vorbeiströmt die, nachdem sie an den Kühlrippen vorbeigeströmt ist, als Kaltluft 22 aus dem Verdampfer 11 herausströmt. In Bezug auf die Fließrichtung 15, 16, 17, 18 des Kühlmittels ist vor dem Verdampfer 11 ein thermostatisches Expansionsventil 21 angeordnet, das in Abhängigkeit einer Temperatur $T_V$ des Kühlmittels in Bezug auf die Fließrichtung 15, 16, 17, 18 des Kühlmittels hinter dem Verdampfer 11 geregelt wird. Zur Messung der Temperatur $T_V$ des Kühlmittels in Bezug auf die Fließrichtung 15, 16, 17, 18 des Kühlmittels hinter dem Verdampfer 11 ist ein Kühlmittel-Temperatursensor 25 vorgesehen.

In dem Kühlmittelkreislauf 10 ist in Bezug auf die Fließrichtung 15, 16, 17, 18 des Kühlmittels hinter dem Kompressor 14 ein Kondensator 12 zum Verflüssigen von Kühlmittel vorgesehen. Zudem ist in Bezug auf die Fließrichtung 15, 16, 17, 18 des Kühlmittels hinter dem Kondensator 12 ein Kühlmittel-Sammler 20 zum Speichern von Kühlmittel vorgesehen.

Die Klimaanlage 5 umfasst eine Klimaanlagensteuerung 30 zur Steuerung des Kompressors 14 durch Ausgabe des Kompressorstromes $I_K$. Eingangsgrößen in die Klimaanlagensteuerung 30 sind

- ein in dem Kühlmittelkreislauf in Bezug auf die Fließrichtung 15, 16, 17, 18 des Kühlmittels hinter dem Kompressor 14, insbesondere hinter dem Kondensator 12 bzw. hinter dem Kühlmittel-Sammler 20 (und damit vor dem Verdampfer 14 bzw. vor dem thermostatischen Expansionsventil 21) herrschenden Drucks $p_{HD}$ des Kühlmittels, der mittels eines Drucksensors 34 messbar ist,
- die Antriebsdrehzahl $n_K$ des Kompressors 14, die der Klimaanlagensteuerung 30 von der Motorsteuerung 3 übermittelbar ist,

- eine Temperatur $T_{LV}$ der Kaltluft 22, die mittels eines Temperatursensors 33 messbar ist, und
- ein in dem Kühlmittelkreislauf in Bezug auf eine Fließrichtung 15, 16, 17, 18 des Kühlmittels vor dem Kompressor 14 und insbesondere hinter dem Verdampfer 11 herrschenden Drucks $p_{ND}$ des Kühlmittels, der mittels eines Drucksensors 32 messbar ist.

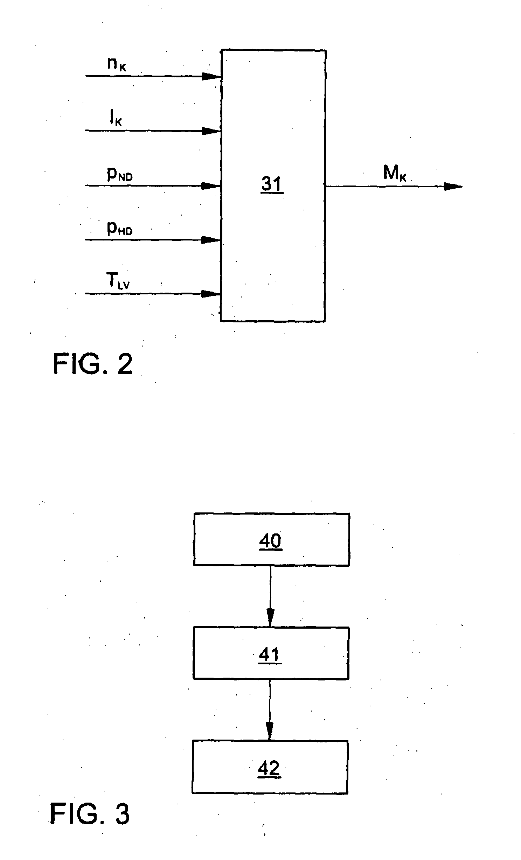

Die Klimaanlagensteuerung 30 umfasst eine in Fig. 1 und Fig. 2 dargestellte Momentenbestimmung 31 zur Bestimmung eines zum Betrieb des Kompressors 14 notwendigen Antriebsdrehmomentes $M_K$ in Abhängigkeit

- des in dem Kühlmittelkreislauf in Bezug auf die Fließrichtung 15, 16, 17, 18 des Kühlmittels hinter dem Kompressor 14, insbesondere hinter dem Kondensator 12 bzw. hinter dem Kühlmittel-Sammler 20 (und damit vor dem Verdampfer 14 bzw vor dem thermostatischen Expansionsventil 21) herrschenden Drucks $p_{HD}$ des Kühlmittels,
- der Antriebsdrehzahl $n_K$ des Kompressors 14,
- der Temperatur $T_{LV}$ der Kaltluft 22,
- des in dem Kühlmittelkreislauf in Bezug auf eine Fließrichtung 15, 16, 17, 18 des Kühlmittels vor dem Kompressor 14 und insbesondere hinter dem Verdampfer 11 herrschenden Drucks $p_{ND}$ des Kühlmittels und
- des Kompressorstromes $I_K$.

Die Momentenbestimmung 31 kann eine mehrdimensionale Tabelle oder ein neuronales Netz umfassen. Im vorliegenden Ausführungsbeispiel ist vorgesehen, dass die Mömentenbestimmung 31 eine Anzahl von Tabellen entsprechend Tabelle 1 umfasst, in der das zum Betrieb des Kompressors 14 notwendige Antriebsdrehmoment $M_K$ in Abhängigkeit des in dem Kühlmittelkreislauf in Bezug auf die Fließrichtung 15, 16, 17, 18 des Kühlmittels hinter dem Kompressor 14, insbesondere hinter dem Kondensator 12 bzw. hinter dem Kühlmittel-Sammler 20 (und damit vor dem Verdampfer 14 bzw. vor dem thermostatischen Expansionsventil 21) herrschenden Drucks $p_{HD}$ des Kühlmittels und der Antriebsdrehzahl $n_K$ des Kompressors 14 eingetragen ist. Ist z.B. der Drucks $p_{HD}$ 20 bar und die Antriebsdrehzahl $n_K$ 1000 min$^{-1}$, dann ist das zum Betrieb des Kompressors notwendige Antriebsdrehmoment $M_K$ 20Nm. Dabei umfasst die Momentenbestimmung 31 mehrere derartiger Tabellen, deren Einträge für das zum Betrieb des Kompressors 14 notwendige Antriebsdrehmoment $M_K$ von

- der Temperatur $T_{LV}$ der Kaltluft 22,
- dem in dem Kühlmittelkreislauf in Bezug auf eine Fließrichtung 15, 16, 17, 18 des Kühlmittels vor dem Kompressor 14 und insbesondere hinter dem Verdampfer 11 herrschenden Druck $p_{ND}$ des Kühlmittels und/oder
- dem Kompressorstrom $I_K$
abhängig sind. So ist Tabelle 1 ein Beispiel für eine Tabelle für die in Bezug auf das vorliegende Ausführungsbeispiel gilt:

$$I_K \doteq 0{,}7A$$

$$T_{LV} = 3°C$$

$$p_{ND} = 3bar$$

## Tabelle 1

| $n_K$ [1/min]<br>$p_{HD}$ [bar] | 800 | 1000 | 1200 | ... |
|---|---|---|---|---|
| 18 | ... | ... | ... | ... |
| 20 | ... | 20 Nm | ... | ... |
| 22 | ... | ... | ... | ... |
| ... | ... | ... | ... | ... |

Es kann auch vorgesehen sein, dass das zum Betrieb des Kompressors 14 notwendige Antriebsdrehmoment $M_K$ mittels der Momentenbestimmung 31 in Abhängigkeit

- des in dem Kühlmittelkreislauf in Bezug auf die Fließrichtung 15, 16, 17, 18 des Kühlmittels hinter dem Kompressor 14, insbesondere hinter dem Kondensator 12 bzw. hinter dem Kühlmittel-Sammler 20 (und damit vor dem Verdampfer 14 bzw. vor dem thermostatischen Expansionsventil 21) herrschenden Drucks $p_{HD}$ des Kühlmittels und
- der Antriebsdrehzahl $n_K$ des Kompressors,
  sowie einer oder zweier der Größen
- Temperatur $T_{LV}$ der Kaltluft 22,
- in dem Kühlmittelkreislauf in Bezug auf eine Fließrichtung 15, 16, 17, 18 des Kühlmittels vor dem Kompressor 14 und insbesondere hinter dem Verdampfer 11 herrschenden Druck $p_{ND}$ des Kühlmittels und
- Kompressorstrom $I_K$

bestimmt wird.

Fig. 3 zeigt ein in der Klimaanlagensteuerung 30 implementiertes Verfahren zum Betrieb der Klimaanlage 5. Dabei wird in einem Schritt 40 ein aktueller Wert für den Kompressorstrom $I_K$ ermittelt und an den Kompressor 14 aufgegeben. In einem weiteren Schritt 41 wird das zum Betrieb des Kompressors 14 notwendige Antriebsdrehmoment $M_K$ mittels der Momentenbestimmung 31 bestimmt und in einem folgenden Schritt 42 an die Motorsteuerung 3 ausgegeben.

Die Elemente in den Figuren sind unter Berücksichtigung von Einfachheit und Klarheit und nicht notwendigerweise maßstabsgetreu gezeichnet. So sind z.B. die Größenordnungen einiger Elemente übertrieben gegenüber anderen Elementen dargestellt, um das Verständnis der Ausführungsbeispiele der vorliegenden Erfindung zu verbessern.

**Bezugszeichenliste**

| | |
|---|---|
| 1 | Kraftfahrzeug |
| 2 | Verbrennungsmotor |
| 3 | Motorsteuerung |
| 5 | Klimaanlage |
| 10 | Kühlmittelkreislauf |
| 11 | Verdampfer |
| 12 | Kondensator |
| 14 | Kompressor |
| 15, 16, 17, 18 | Fließrichtung |
| 20 | Kühlmittel-Sammler |
| 21 | thermostatisches Expansionsventil |
| 22 | Kaltluft |
| 23 | Luft |
| 25 | Kühlmittel-Temperatursensor |
| 30 | Klimaanlagensteuerung |
| 31 | Momentenbestimmung |
| 32, 34 | Drucksensor |
| 33 | Temperatursensor |

| 40, 41, 42 | Schritt |
|---|---|

| $I_K$ | Kompressorstrom |
|---|---|
| $M_K$ | Antriebsdrehmoment |
| $n_K$ | Antriebsdrehzahl eines Kompressors |
| $p_{HD}$, $p_{ND}$ | Drucks Kühlmittels |
| $T_V$ | Temperatur eines Kühlmittels |
| $T_{LV}$ | Temperatur von Kaltluft |

**Patentansprüche**

1. Klimaanlage (5) für ein Kraftfahrzeug (1) mit einem Kühlmittelkreislauf (10) durch den Kühlmittel mittels eines Kompressors (14) pumpbar ist, wobei die Klimaanlage (5) eine Momentenbestimmung (31) zur Bestimmung eines zum Betrieb des Kompressors (14) notwendigen Antriebsdrehmomentes ($M_k$) in Abhängigkeit

   - einer Temperatur ($T_{LV}$) von Luft (22), die an einem in den Kühlmittelkreislauf (10) integrierten Verdampfer (11) zum Verdampfen von Kühlmittel vorbeigeströmt ist,
   - eines in dem Kühlmittelkreislauf (10) in Bezug auf eine Fließrichtung (15, 16, 17, 18) des Kühlmittels vor dem Kompressor (14) herrschenden Drucks ($p_{ND}$) des Kühlmittels und/oder
   - einem Stellsignal ($I_K$) zur Einstellung eines einstellbaren Kompressorhubes des Kompressors (14)
   aufweist und mittels der Momentenbestimmung (31) das zum Betrieb des Kompressors (14) notwendige Antriebsmoment (Mk) in Abhängigkeit des in dem Kühlmittelkreislauf in Bezug auf die Fließrichtung (15, 16, 17, 18) des Kühlmittels vor dem Kompressor (14) und hinter dem Verdampfer (11) herrschenden Drucks ($p_{ND}$) des Kühlmittels bestimmbar ist, **dadurch gekennzeichnet, dass** in Bezug auf die Fließrichtung (15, 16, 17, 18) des Kühlmittels hinter dem Kondensator (12) und vor dem Verdampfer (11) ein Kühlmittelsammler (20) vorgesehen sowie zur Messung des vor dem Kompressor (14) herrschenden Drucks ($p_{ND}$) des Kühlmittels ein Drucksensor (32) vor dem Kompressor (14) und hinter dem Verdampfer (11) angeordnet ist.

2. Klimaanlage (5) nach Anspruch 1, **dadurch gekennzeichnet, dass** das Kühlmittel R134a oder R152a ist.

3. Klimaanlage (5) Anspruch 1, **dadurch gekennzeichnet, dass** das Kühlmittels Kohlendioxid ist.

4. Klimaanlage (5) nach einem der vorhergehenden Ansprüche, **dadurch gekennzeichnet, dass** mittels der Momentenbestimmung (31) das zum Betrieb des Kompressors (14) notwendige Antriebsdrehmoment ($M_k$) in Abhängigkeit eines in dem Kühlmittelkreislauf (10) in Bezug auf die Fließrichtung (15, 16, 17, 18) des Kühlmittels hinter dem Kompressor (14) herrschenden Drucks ($p_{HD}$) des Kühlmittels bestimmbar ist.

5. Klimaanlage (5) nach Anspruch 4, **dadurch gekennzeichnet, dass** mittels der Momentenbestimmung (31) das zum Betrieb des Kompressors (14) notwendige Antriebsdrehmoment ($M_k$) in Abhängigkeit eines in dem Kühlmittelkreislauf (10) in Bezug auf die Fließrichtung (15, 16, 17, 18) des Kühlmittels hinter einem Kondensator (12) oder hinter einem Kühlmittel-Sammler (20) herrschenden Drucks ($p_{HD}$) des Kühlmittels bestimmbar ist, wobei der Kondensator (12) und der Kühlmittel-Sammler (20) hinter dem Kompressor (14) und vor dem Verdampfer (14) angeordnet sind.

6. Klimaanlage (5) nach einem der vorhergehenden Ansprüche, **dadurch gekennzeichnet, dass** mittels der Momentenbestimmung (31) das zum Betrieb des Kompressors (14) notwendige Antriebsdrehmoment ($M_k$) in Abhängigkeit einer Antriebsdrehzahl ($n_k$) des Kompressors (14) bestimmbar ist.

7. Kraftfahrzeug (1), **dadurch gekennzeichnet, dass** es eine Klimaanlage (5) nach einem der vorhergehenden Ansprüche aufweist,

8. Kraftfahrzeug (1) nach Anspruch 7, **dadurch gekennzeichnet, dass** es ein Antriebsaggregat (2) zum Antrieb des Kraftfahrzeuges (1) und zum Antrieb des Kompressors (14) sowie eine Antriebssteuerung (3) zur Steuerung des Antriebsaggregates (2) in Abhängigkeit des mittels der Mornentenbestimmung (31) bestimmbaren zum Betrieb des Kompressors (14) notwendigen Antriebsdrehmomentes ($M_k$) aufweist.

9. Verfahren zum Betrieb einer Klimaanlage (5) für ein Kraftfahrzeug (1) mit einem Kühlmittelkreislauf (10), durch den Kühlmittel mittels eines Kompressors (14) pumpbar ist, wobei ein zum Betrieb des Kompressors (14) notwendiges Antriebsdrehmomentes ($M_k$) in Abhängigkeit

- einer Temperatur ($T_{LV}$) von Luft (22), die an einem in den Kühlmittelkreislauf (10) integrierten Verdampfer (11) zum Verdampfen von Kühlmittel vorbeigeströmt ist,
- eines in dem Kühlmittelkreislauf (10) in Bezug auf eine Fließrichtung (15, 16, 17, 18) des Kühlmittels vor dem Kompressor (14) herrschenden Drucks ($p_{ND}$ des Kühlmittels und/oder
- einem Stellsignal ($I_K$) zur Einstellung eines einstellbaren Kompressorhubes des Kompressors (14)

bestimmt und mittels der Momentenbestimmung (31) das zum Betrieb des Kompressors (14) notwendige Antriebsmoment ($M_k$) in Abhängigkeit des in dem Kühlmittelkreislauf in Bezug auf eine Fließrichtung (15, 16, 17, 18) des Kühlmittels vor dem Kompressor (14) und hinter dem Verdampfer (11) herrschenden Drucks ($p_{ND}$) des Kühlmittels bestimmt wird, **dadurch gekennzeichnet, dass** in Bezug auf die Fließrichtung (15, 16, 17, 18) des Kühlmittels hinter dem Kondensator (12) und vor dem Verdampfer (11) ein Kuhlmittelsammler (20) vorgesehen sowie zur Messung des vor dem Kompressor (14) herrschenden Drucks ($p_{ND}$) des Kühlmittels ein Drucksensor (32) vor dem Kompressor (14) und hinter dem Verdampfer (11) angeordnet ist.

10. Verfahren nach Anspruch 9, **dadurch gekennzeichnet, dass** das zum Betrieb des Kompressors (14) notwendige Antriebsdrehmoment ($M_k$) in Abhängigkeit eines in dem Kühlmittelkreislauf (10) in Bezug auf die Fließrichtung (15, 16, 17, 18) des Kühlmittels hinter dem Kompressor (14) herrschenden Drucks ($p_{HD}$) des Kühlmittels bestimmt wird.

11. Verfahren nach Anspruch 9 oder 10, **dadurch gekennzeichnet, dass** das zum Betrieb des Kompressors (14) notwendige Antriebsdrehmoment ($M_k$) in Abhängigkeit einer Antriebsdrehzahl ($n_k$) des Kompressors (14) bestimmt wird.

12. Verfahren nach einem der Ansprüche 9 bis 11, **dadurch gekennzeichnet, dass** das zum Betrieb des Kompressors (14) notwendige Antriebsdrehmoment ($M_k$) in Abhängigkeit einer Temperatur ($T_{LV}$) von Luft (22), die an einem in den Kühlmittelkreislauf (10) integrierten Verdampfer (11) zum Verdampfen von Kühlmittel vorbeigeströmt ist und einem Stellsignal ($I_k$) zur Einstellung eines einstellbaren Kompressorhubes des Kompressors (14) bestimmt wird.

**Claims**

1. Air conditioning system (5) for a motor vehicle (1) having a coolant circuit (10) through which coolant can be pumped by means of a compressor (14), wherein the air conditioning system (5) has a torque-determining device (31) for determining a drive torque ($M_K$), necessary to operate the compressor (14), as a function of

- a temperature ($T_{LV}$) of air (22) which has flowed past a vaporizer (11), integrated into the coolant circuit (10), for vaporizing coolant,
- a pressure ($p_{ND}$) of the coolant which is present in the coolant circuit (10) upstream of the compressor (14) with respect to a direction of flow (15, 16, 17, 18) of the coolant, and/or
- an activation signal ($I_K$) for setting an adjustable compressor stroke of the compressor (14),

and by means of the torque-determining device (31) the drive torque ($M_K$), necessary to operate the compressor (14), can be determined as a function of the pressure ($p_{ND}$) of the coolant which is present in the coolant circuit upstream of the compressor (14) and downstream of the vaporizer (11) with respect to the direction of flow (15, 16, 17, 18) of the coolant, **characterized in that** a coolant collector (20) is provided downstream of the condenser (12) and upstream of the vaporizer (11) with respect to the direction of flow (15, 16, 17, 18) of the coolant, and in order to measure the pressure ($p_{ND}$) of the coolant which is present upstream of the compressor (14) a pressure sensor (32) is arranged upstream of the compressor (14) and downstream of the vaporizer (11).

2. Air conditioning system (5) according to Claim 1, **characterized in that** the coolant is R134a or R152a.

3. Air conditioning system (5) according to Claim 1, **characterized in that** the coolant is carbon dioxide.

4. Air conditioning system (5) according to one of the preceding claims, **characterized in that**, by means of the torque-determining device (31), the drive torque ($M_K$), necessary to operate the compressor (14), can be determined as a function of a pressure ($p_{HD}$) of the coolant which is present in the coolant circuit (10) downstream of the compressor (14) with respect to the direction of flow (15, 16, 17, 18) of the coolant.

5. Air conditioning system (5) according to Claim 4, **characterized in that**, by means of the torque-determining device (31), the drive torque ($M_K$), necessary to operate the compressor (14), can be determined as a function of a pressure ($p_{HD}$) of the coolant which is present in the coolant circuit (10) downstream of a condenser (12) or downstream of a coolant collector (20) with respect to the direction of flow (15, 16, 17, 18) of the coolant, wherein the condenser (12) and the coolant collector (20) are arranged downstream of the compressor (14) and upstream of the vaporizer (11).

6. Air conditioning system (5) according to one of the preceding claims, **characterized in that**, by means of the torque-determining device (31), the drive torque ($M_K$), necessary to operate the compressor (14), can be determined as a function of a drive rotational speed ($n_K$) of the compressor (14).

7. Motor vehicle (1), **characterized in that** it has an air conditioning system (5) according to one of the preceding claims.

8. Motor vehicle (1) according to Claim 7, **characterized in that** it has a drive unit (2) for driving the motor vehicle (1) and for driving the compressor (14), and a drive controller (3) for controlling the drive unit (2) as a function of the drive torque ($M_K$) which can be determined by means of the torque-determining device (31) and is necessary to operate the compressor (14).

9. Method for operating an air conditioning system (5) for a motor vehicle (1) having a coolant circuit (10) through which coolant can be pumped by means of a compressor (14), wherein a drive torque ($M_K$), necessary to operate the compressor (14), is determined as a function of

- a temperature ($T_{LV}$) of air (22) which has flowed past a vaporizer (11), integrated into the coolant circuit (10), for vaporizing coolant,
- a pressure ($p_{ND}$) of the coolant which is present in the coolant circuit (10) upstream of the compressor (14) with respect to a direction of flow (15, 16, 17, 18) of the coolant, and/or
- an activation signal ($I_K$) for setting an adjustable compressor stroke of the compressor (14),
and by means of the torque-determining device (31) the drive torque ($M_K$), necessary to operate the compressor (14), is determined as a function of the pressure ($p_{ND}$) of the coolant which is present in the coolant circuit upstream of the compressor (14) and downstream of the vaporizer (11) with respect to a direction of flow (15, 16, 17, 18) of the coolant, **characterized in that** a coolant collector (20) is provided downstream of the condenser (12) and upstream of the vaporizer (11) with respect to the direction of flow (15, 16, 17, 18) of the coolant, and in order to measure the pressure ($p_{ND}$) of the coolant which is present upstream of the compressor (14) a pressure sensor (32) is arranged upstream of the compressor (14) and downstream of the vaporizer (11).

10. Method according to Claim 9, **characterized in that** the drive torque ($M_K$), necessary to operate the compressor (14), is determined as a function of a pressure ($p_{HD}$) of the coolant which is present in the coolant circuit (10) downstream of the compressor (14) with respect to the direction of flow (15, 16, 17, 18) of the coolant.

11. Method according to Claim 9 or 10, **characterized in that** the drive torque ($M_K$), necessary to operate the compressor (14), is determined as a function of a drive rotational speed ($n_K$) of the compressor (14).

12. Method according to one of Claims 9 to 11, **characterized in that** the drive torque ($M_K$), necessary to operate the compressor (14), is determined as a function of a temperature ($T_{LV}$) of air (22) which has flowed past a vaporizer (11), integrated into the coolant circuit (10), for vaporizing coolant, and an activation signal ($I_K$) for setting an adjustable compressor stroke of the compressor (14).

**Revendications**

1. Installation de climatisation (5) pour véhicule automobile (1), l'installation présentant
un circuit (10) de fluide de refroidissement dans lequel un fluide de refroidissement peut être pompé au moyen d'un compresseur (14),
l'installation de climatisation (5) présentant une détermination (31) de couple qui détermine le couple de rotation d'entraînement ($M_K$) nécessaire pour le fonctionnement du compresseur (14) en fonction :

de la température ($T_{LV}$) de l'air (22) qui balaye un évaporateur (11) intégré dans le circuit (10) de fluide de refroidissement pour vaporiser le fluide de refroidissement,

de la pression ($p_{ND}$) du fluide de refroidissement qui règne dans le circuit (10) de fluide de refroidissement en amont du compresseur (14) dans la direction d'écoulement (15, 16, 17, 18) du fluide de refroidissement et/ou d'un signal de réglage ($I_K$) qui règle la course réglable du compresseur (14),

le couple d'entraînement ($M_K$) nécessaire pour le fonctionnement du compresseur (14) pouvant être déterminé au moyen de la détermination (31) de couple en fonction de la pression ($p_{ND}$) du fluide de refroidissement qui règne dans le circuit de fluide de refroidissement en amont du compresseur (14) et en aval de l'évaporateur (11) dans la direction d'écoulement (15, 16, 17, 18) du fluide de refroidissement, **caractérisée en ce que** un collecteur (20) de fluide de refroidissement est prévu en aval du condenseur (12) et en amont du compresseur (11) dans la direction d'écoulement (15, 16, 17, 18) du fluide de refroidissement et

**en ce qu'**un capteur de pression (32) est disposé en amont du compresseur (14) et en aval de l'évaporateur (11) pour mesurer la pression ($p_{ND}$) du fluide de refroidissement qui règne en amont du compresseur (14).

2. Installation de climatisation (5) selon la revendication 1, **caractérisée en ce que** le fluide de refroidissement est le R134a ou le R152a.

3. Installation de climatisation (5) selon la revendication 1, **caractérisée en ce que** le fluide de refroidissement est le dioxyde de carbone.

4. Installation de climatisation (5) selon l'une des revendications précédentes, **caractérisée en ce que** le couple de rotation d'entraînement ($M_K$) nécessaire pour le fonctionnement du compresseur (14) peut être déterminé au moyen de la détermination (31) de couple en fonction de la pression ($p_{HD}$) du fluide de refroidissement qui règne dans le circuit (10) de fluide de refroidissement en aval du compresseur (14) dans la direction d'écoulement (15, 16, 17, 18) du fluide de refroidissement.

5. Installation de climatisation (5) selon la revendication 4, **caractérisée en ce que** le couple de rotation d'entraînement ($M_K$) nécessaire pour le fonctionnement du compresseur (14) peut être déterminé au moyen de la détermination (31) de couple en fonction de la pression ($p_{HD}$) du fluide de refroidissement qui règne dans le circuit (10) de fluide de refroidissement en aval d'un condenseur (12) ou en aval d'un collecteur (20) de fluide de refroidissement dans la direction d'écoulement (15, 16, 17, 18) du fluide de refroidissement et **en ce que** le condenseur (12) et le collecteur (20) de fluide de refroidissement sont disposés en aval du compresseur (14) et en amont de l'évaporateur (11).

6. Installation de climatisation (5) selon l'une des revendications précédentes, **caractérisée en ce que** le couple de rotation d'entraînement ($M_K$) nécessaire pour le fonctionnement du compresseur (14) peut être déterminé au moyen de la détermination (31) de couple en fonction de la vitesse de rotation d'entraînement ($n_K$) du compresseur (14).

7. Véhicule automobile (1) **caractérisé en ce qu'**il présente une installation de climatisation (5) selon l'une des revendications précédentes.

8. Véhicule automobile (1) selon la revendication 7, **caractérisé en ce qu'**il présente un ensemble d'entraînement (2) qui entraîne le véhicule automobile (1) et qui entraîne le compresseur (14), ainsi qu'une commande d'entraînement (3) qui commande l'ensemble d'entraînement (2) en fonction du couple de rotation d'entraînement ($M_K$) nécessaire pour le fonctionnement du compresseur (14) et qui peut être déterminé au moyen de la détermination (31) de couple.

9. Procédé de conduite d'une installation de climatisation (5) pour véhicule automobile (1), l'installation de climatisation présentant

un circuit (10) de fluide de refroidissement dans lequel un fluide de refroidissement peut être pompé au moyen d'un compresseur (14), le couple de rotation d'entraînement ($M_K$) nécessaire pour l'entraînement du compresseur (14) étant déterminé en fonction :

de la température ($T_{LV}$) de l'air (22) qui balaye un évaporateur (11) intégré dans le circuit (10) de fluide de refroidissement pour vaporiser le fluide de refroidissement,
de la pression ($p_{ND}$) du fluide de refroidissement qui règne dans le circuit (10) de fluide de refroidissement en amont du compresseur (14) dans la direction d'écoulement (15, 16, 17, 18) du fluide de refroidissement et/ou d'un signal de réglage ($I_K$) qui règle la course réglable du compresseur (14),
le couple d'entraînement ($M_K$) nécessaire pour le fonctionnement du compresseur (14) étant déterminé au moyen de la détermination (31) de couple en fonction de la pression ($p_{ND}$) du fluide de refroidissement qui règne dans le circuit de fluide de refroidissement en amont du compresseur (14) et en aval de l'évaporateur (11) dans la direction d'écoulement (15, 16, 17, 18) du fluide de refroidissement,

**caractérisé en ce que**

un collecteur (20) de fluide de refroidissement est prévu en aval du condenseur (12) et en amont du compresseur (11) dans la direction d'écoulement (15, 16, 17, 18) du fluide de refroidissement et

**en ce qu'**un capteur de pression (32) est disposé en amont du compresseur (14) et en aval de l'évaporateur (11) pour mesurer la pression ($p_{ND}$) du fluide de refroidissement qui règne en amont du compresseur (14).

10. Procédé selon la revendication 9, **caractérisé en ce que** le couple de rotation d'entraînement ($M_K$) nécessaire pour le fonctionnement du compresseur (14) est déterminé en fonction de la pression ($p_{HD}$) du fluide de refroidissement qui règne dans le circuit (10) de fluide de refroidissement en aval du compresseur (14) dans la direction d'écoulement (15, 16, 17, 18) du fluide de refroidissement.

11. Procédé selon les revendications 9 ou 10, **caractérisé en ce que** le couple de rotation d'entraînement ($M_K$) nécessaire pour le fonctionnement du compresseur (14) est déterminé en fonction de la vitesse de rotation d'entraînement ($n_K$) du compresseur (14).

12. Procédé selon l'une des revendications 9 à 11, **caractérisé en ce que** le couple de rotation d'entraînement ($M_K$) nécessaire pour l'entraînement du compresseur (14) est déterminé en fonction de la température ($T_{LV}$) de l'air (22) qui balaye un évaporateur (11) intégré dans le circuit (10) de fluide de refroidissement pour vaporiser le fluide de refroidissement et d'un signal de réglage ($I_K$) qui règle la course réglable du compresseur (14).

FIG. 1

EP 1 819 541 B1

FIG. 2

FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10106243 A1
- WO 2005123428 A1

- EP 1647711 A2

### In der Beschreibung aufgeführte Nicht-Patentliteratur

- **BOSCH.** Kraftfahrtechnisches Taschenbuch. 1999, 778, 779